# DEMANDE DE BREVET EUROPEEN

(11) **EP 4 704 004 A1**
(43) Date de publication de la demande: **04.03.2026**
(21) Numéro de dépôt: 25198166.8
(22) Date de dépôt: 26.08.2025
(51) Int. Cl.: G06Q 10/20, G06Q 50/40, B64F 5/40

(54) **PROCEDE ET DISPOSITIF D'AIDE A UNE DECISION DE MAINTENANCE D'UN APPAREIL TEL Q'UN AERONEF, ET PROCEDES CORRESPONDANTS DE CONSTRUCTION D'UN MODELE ET DE MAINTENANCE**

(30) Priorité: 29.08.2024 FR 2409218
(71) Demandeur: AIRBUS (S.A.S.), 31700 Blagnac (FR)
(72) Inventeur: ORDY, Bernard, 31700 BLAGNAC Cedex (FR)
(74) Mandataire: Cabinet Le Guen Maillet

(57) **Abrégé**

Il est proposé un procédé d'aide à une décision de maintenance relative à un appareil, tel qu'un aéronef, sur lequel une défaillance technique est détectée et fait l'objet d'une entrée dans un journal de bord, dite entrée à traiter. Le procédé comprend : recevoir l'entrée à traiter ; interroger un modèle avec l'entrée à traiter ; et fournir à un utilisateur un résultat fourni par le modèle et comprenant une liste de réponses associée à un groupe d'entrées sélectionné par le modèle du fait qu'il comprend des entrées ayant une signification identique ou proche, en matière de description de défaillance technique, de la signification de l'entrée à traiter. Grâce à cette liste, l'utilisateur peut rapidement et efficacement apporter une réponse à l'entrée à traiter. Il est également proposé un procédé de construction du modèle, à partir de données (entrées et réponses) collectées dans des journaux de bord d'une flotte d'appareils.

## Description

### DOMAINE TECHNIQUE

Le domaine de l'invention est celui de la maintenance d'appareils, notamment mais non exclusivement des aéronefs.

Plus précisément, la présente invention concerne un procédé d'aide à une décision de maintenance relative à un appareil sur lequel une défaillance technique est détectée et fait l'objet d'une entrée dans un journal de bord (« logbook » en anglais) de l'appareil.

La présente invention concerne également un dispositif d'assistance, ainsi qu'un produit programme d'ordinateur et un support de stockage, permettant la mise en œuvre d'un tel procédé d'aide à une décision de maintenance.

La présente invention concerne aussi un procédé de construction d'un modèle configuré pour être utilisé dans le procédé précité d'aide à une décision de maintenance.

La présente invention concerne aussi un procédé de maintenance utilisant le procédé précité d'aide à une décision de maintenance.

La présente invention n'est pas limitée aux aéronefs mais s'applique également à de nombreux autres appareils (véhicules, machines, dispositifs, équipements, etc.) nécessitant une maintenance et pour lesquels il existe un journal de bord contenant des entrées (consignant les défaillances techniques détectées sur l'appareil) et des réponses correspondantes (consignant les procédures de maintenance ayant permis de répondre à ces défaillances).

### ETAT DE LA TECHNIQUE ANTERIEURE

On présente maintenant l'état de la technique antérieure dans le cas de la maintenance d'un aéronef. Cette discussion peut aisément être transposée à la maintenance d'autres types d'appareils.

Toutes les opérations de maintenance effectuées sur un aéronef (nouvelles pièces apportées, date du contrôle, etc.) sont consignées dans un journal de bord (logbook) sous une forme organisée et déterminée. Lorsqu'il y a une inscription (aussi appelée « entrée » ou encore « plainte logbook ») dans le journal de bord, de la part des pilotes, du personnel de bord ou des mécaniciens, le vol suivant n'est autorisé que lorsqu'une réponse correspondante est enregistrée et après acceptation de cette réponse par l'équipage qui va exécuter ce vol suivant. Chaque entrée dans le journal de bord d'un aéronef est relative à une défaillance technique détectée sur cet aéronef (alarme, anomalie ou autre événement constaté par l'équipage durant le vol ou au sol), et la réponse associée indique une procédure de maintenance (aussi appelée « procédure de réparation » ou « procédure de dépannage ») ayant permis de répondre à cette défaillance technique.

La procédure standard pour apporter une réponse à une entrée dans le journal de bord consiste à utiliser les données disponibles sur l'aéronef (par exemple, le compte-rendu de vol, ou PFR pour « Post Flight Report » en anglais) et le détail de l'entrée dans le journal de bord, afin qu'un opérateur de maintenance (mécanicien) puisse entamer la procédure de diagnostic. La procédure de diagnostic est guidée par le manuel de diagnostic (ou TSM pour « TroubleShooting Manual » en anglais) afin d'isoler la cause de la panne et de faire le lien avec une procédure de maintenance (réparation) adaptée. Les procédures de maintenance sont disponibles dans le manuel de maintenance de l'aéronef (ou AMM pour « Aircraft Maintenance Manual » en anglais). Les manuels TSM et AMM, qui étaient à l'origine au format papier, se présentent désormais sous la forme de documents électroniques dans lesquels l'opérateur de maintenance peut librement naviguer grâce à des hyperliens. De manière similaire, le journal de bord (logbook), qui était à l'origine au format papier, se présente désormais sous la forme d'un document électronique appelé « eLogbook ». Il se peut aussi que le journal de bord papier soit digitalisé manuellement, par retranscription de son contenu par des opérateurs, ou bien digitalisé de façon automatique (par exemple en utilisant un scanner et un logiciel de reconnaissance de caractères).

La procédure standard précitée, pour apporter une réponse à une entrée dans le journal de bord, donne satisfaction mais il existe un besoin de l'améliorer encore. En effet, pour l'opérateur de maintenance qui intervient souvent pendant le temps de rotation de l'aéronef (TAT, pour « Turn Around Time » en anglais), elle peut être consommatrice de temps et peut nécessiter plusieurs tentatives pour identifier la bonne procédure de maintenance. En effet, la procédure de recherche de panne (basée sur le manuel TSM) ainsi que les tests associés (basés sur le manuel AMM) peuvent demander beaucoup de temps. De plus, la clôture de cette entrée (plainte logbook) peut nécessiter plusieurs tentatives pour identifier la bonne procédure de correction de l'anomalie rapportée dans cette entrée. En d'autres termes, dans la procédure standard, le mécanicien, pour identifier l'action de maintenance qui permettra de solutionner l'anomalie rapportée dans l'entrée du journal de bord (plainte logbook), doit utiliser le manuel TSM qui lui demande de réaliser plusieurs actions de maintenance (décrites dans le manuel AMM) avant d'arriver à l'action finale de résolution décrite elle aussi dans le manuel AMM.

### EXPOSE DE L'INVENTION

Il est proposé un procédé, implémenté par un dispositif d'assistance comprenant une circuiterie électronique, d'aide à une décision de maintenance relative à un appareil sur lequel une défaillance technique est détectée et fait l'objet d'une entrée dans un journal de bord de l'appareil, dite entrée à traiter, le procédé comprenant :
- recevoir l'entrée à traiter (plainte logbook) ;
- interroger, avec l'entrée à traiter, un modèle configuré pour fournir, quand il est interrogé avec une entrée donnée, un résultat comprenant une liste de réponses associée à un groupe d'entrées sélectionné parmi une pluralité de groupes d'entrées, chaque groupe d'entrées étant formé à partir d'entrées comprises dans des données collectées et ayant une signification commune en matière de description de défaillance technique, chaque groupe d'entrées étant associé à une liste de réponses générée à partir des réponses associées aux entrées dudit groupe d'entrées, le groupe d'entrées sélectionné comprenant des entrées ayant une signification identique ou proche, en matière de description de défaillance technique, de la signification de l'entrée donnée, les données collectées provenant de journaux de bord d'une flotte d'appareils et comprenant des entrées, relatives à des défaillances techniques détectées sur les appareils de la flotte, et des réponses associées, indiquant les procédures de maintenance ayant permis de répondre auxdites défaillances techniques ; et
- fournir à un utilisateur le résultat de l'interrogation du modèle avec l'entrée à traiter, le résultat comprenant la liste de réponses associée au groupe d'entrées sélectionné par le modèle en fonction de l'entrée à traiter.

Ainsi, la solution proposée permet d'aider un utilisateur de choisir facilement et rapidement la procédure (action) de maintenance la plus pertinente et performante, et donc ainsi apporter rapidement et efficacement une réponse à une entrée dans le journal de bord d'un appareil (tel qu'un aéronef). Elle utilise un modèle s'appuyant sur des données collectées dans des journaux de bord d'une flotte d'appareils et comprenant des entrées et des réponses associées. En effet, considérant que tous les appareils de cette flotte volent ou sont techniquement prêts à voler, il est possible d'en conclure que toutes les entrées des journaux de bord de ces appareils ont reçu une réponse efficace et acceptée par les pilotes. Quand le modèle est interrogé avec une entrée (de journal de bord) à traiter, il fournit un résultat comprenant une liste de réponses qui sont associées à des entrées ayant une signification identique ou proche, en matière de description de défaillance technique, de la signification de l'entrée à traiter. En d'autres termes, en utilisant des millions d'entrées de journaux de bord et les réponses correspondantes, la solution proposée permet de guider efficacement l'utilisateur (par exemple un opérateur de maintenance) en lui listant des réponses déjà apportées par le passé (pour d'autres appareils, en réponse à des entrées identiques ou proches).

Selon un mode de réalisation particulier, l'appareil est un aéronef.

Selon un mode de réalisation particulier, la liste de réponses associée au groupe d'entrées sélectionné comprend des références appartenant au groupe comprenant :
- des références d'un manuel de maintenance des aéronefs, dites références AMM, pour « Aircraft Maintenance Manual » en anglais ; et
- des références d'une liste principale d'équipement minimal, dites références MMEL, pour « Master Minimum Equipment List » en anglais.

Ainsi, l'utilisateur peut aisément comprendre la liste de réponses (référence(s) AMM et/ou référence(s) MMEL) fournie par l'exécution du procédé. On rappelle que la MMEL est une liste catégorisée de systèmes, d'instruments et d'équipements embarqués qui peuvent être inopérants pour un nombre limité de vol pour un modèle d'aéronef spécifié.

Selon un mode de réalisation particulier, chacune des réponses, comprises dans la liste de réponses associée au groupe d'entrées sélectionné, est associée à une information d'efficacité.

Ainsi, l'utilisateur peut facilement comparer entre elles les réponses contenues dans la liste de réponses fournie par l'exécution du procédé.

Selon un mode de réalisation particulier, les réponses, comprises dans la liste de réponses associée au groupe d'entrées sélectionné, sont triées en fonction des informations d'efficacité auxquelles lesdites réponses sont associées.

Ainsi, l'utilisateur peut plus facilement faire le choix d'une réponse parmi la liste de réponses fournie par l'exécution du procédé.

Selon un mode de réalisation particulier, l'information d'efficacité associée à une réponse donnée est fonction d'au moins un paramètre appartenant au groupe comprenant :
- un nombre d'occurrence de la réponse donnée dans les données collectées par le modèle ; et
- une période de temps pendant laquelle aucune nouvelle occurrence de la réponse donnée n'apparaît dans les données collectées par le modèle.

De cette façon, l'information d'efficacité est calculée de manière simple et pertinente.

Selon un mode de réalisation particulier, la liste de réponses associée au groupe d'entrées sélectionné comprend :
- une première sous-liste, dite de réparation, contenant des réponses ayant chacune permis d'éviter une nouvelle occurrence de l'entrée associée au moins pendant une durée de référence prédéterminée ; et
- une deuxième sous-liste, dite de libération, contenant des réponses n'ayant chacune permis d'éviter une nouvelle occurrence de l'entrée associée que pendant une durée inférieure à la durée de référence prédéterminée.

Ainsi, on augmente encore la quantité d'information fournie à l'utilisateur pour comparer entre elles les réponses contenues dans la liste de réponses fournie par l'exécution du procédé.

Selon un mode de réalisation particulier, le résultat, de l'interrogation du modèle avec l'entrée à traiter, comprend en outre au moins un indicateur d'impact opérationnel possible.

Ainsi, on augmente encore la quantité d'information fournie à l'utilisateur pour comparer entre elles les réponses contenues dans la liste de réponses fournie par l'exécution du procédé.

Selon un mode de réalisation particulier, ledit au moins un indicateur d'impact opérationnel possible appartient au groupe comprenant :
- un indicateur de retard d'aéronef supérieur à un seuil prédéterminé ;
- un indicateur d'annulation de vol d'aéronef ;
- un indicateur de retour d'aéronef au point de départ ; et
- un indicateur de changement de destination d'aéronef.

Selon un mode de réalisation particulier, ledit au moins un indicateur d'impact opérationnel possible possède une valeur fonction de valeurs d'impact opérationnel possible préalablement obtenues pour au moins certaines des réponses de la liste de réponses associée au groupe d'entrées sélectionné.

Selon un mode de réalisation particulier, le procédé comprend en outre :
- réception d'une réponse retenue par l'utilisateur parmi la liste de réponses associée au groupe d'entrées sélectionné ; et
- ajouter la réponse retenue aux données collectées et traitées par le modèle, en associant la réponse retenue à l'entrée à traiter.

Ainsi, on continue à enrichir les données collectées et donc à améliorer l'efficacité du modèle.

Il est aussi proposé un produit programme d'ordinateur, comportant des instructions entraînant l'exécution, par un processeur, du procédé d'aide à une décision de maintenance évoqué ci-dessus selon l'un quelconque de ses modes de réalisation, lorsque lesdites instructions sont exécutées par le processeur.

Il est aussi proposé un support de stockage, stockant de telles instructions.

Il est aussi proposé un dispositif d'assistance comprenant une circuiterie électronique configurée pour implémenter le procédé d'aide à une décision de maintenance évoqué ci-dessus selon l'un quelconque de ses modes de réalisation.

Il est aussi proposé un procédé, mis en œuvre par ordinateur, de construction d'un modèle configuré pour être utilisé dans un procédé, évoqué ci-dessus selon l'un quelconque de ses modes de réalisation, d'aide à une décision de maintenance relative à un appareil sur lequel une défaillance technique est détectée et fait l'objet d'une entrée dans un journal de bord de l'appareil, dite entrée à traiter, le procédé de construction du modèle comprenant :
- recevoir des données collectées dans des journaux de bord d'une flotte d'appareils et comprenant des entrées et des réponses associées, chaque entrée étant relative à une défaillance technique donnée détectée sur un des appareils de la flotte d'appareils, et étant associée à une réponse indiquant une procédure de maintenance ayant permis de répondre à la défaillance technique donnée ;
- former des groupes d'entrées à partir des entrées comprises dans les données collectées, les entrées d'un même groupe ayant une signification commune en matière de description de défaillance technique ;
- associer à chaque groupe d'entrées une liste de réponses générée à partir des réponses associées aux entrées dudit groupe d'entrées ; et
- apprendre à fournir, quand le modèle est interrogé avec une entrée à traiter donnée, un résultat comprenant une liste de réponses associée à un groupe d'entrées sélectionné parmi la pluralité de groupes d'entrées, le groupe d'entrées sélectionné comprenant des entrées ayant une signification identique ou proche, en matière de description de défaillance technique, de la signification de l'entrée à traiter donnée.

Ainsi, plus la quantité de données collectées et traitées est grande, plus le modèle construit est efficace (c'est-à-dire plus pertinente est la liste de réponses fournie par le modèle lors de l'exécution du procédé précité d'aide à une décision de maintenance).

Il est aussi proposé un procédé de maintenance d'un appareil sur lequel une défaillance technique est détectée et fait l'objet d'une entrée dans un journal de bord de l'appareil, dite entrée à traiter, le procédé de maintenance comprenant :
- exécuter le procédé d'aide à une décision de maintenance évoqué ci-dessus, selon l'un quelconque de ses modes de réalisation, le procédé d'aide recevant l'entrée à traiter et fournissant un résultat comprenant une liste de réponses associée à un groupe d'entrées sélectionné en fonction de l'entrée à traiter ;
- choisir une réponse dans la liste de réponses ; et
- exécuter une procédure de maintenance indiquée dans la réponse choisie.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement la construction d'un modèle (configuré pour être utilisé dans un algorithme d'aide à une décision de maintenance) par un dispositif d'assistance, selon un mode de réalisation de l'invention ;
[Fig. 2] illustre schématiquement le sous-bloc d'analyse des entrées, compris dans le dispositif d'assistance de la Fig. 1, dans un mode de réalisation de l'invention ;
[Fig. 3] illustre schématiquement le sous-bloc d'analyse des réponses, compris dans le dispositif d'assistance de la Fig. 1, dans un mode de réalisation de l'invention ;
[Fig. 4] illustre schématiquement un algorithme de construction d'un modèle (configuré pour être utilisé dans un algorithme d'aide à une décision de maintenance), selon un mode de réalisation de l'invention ;
[Fig. 5] illustre schématiquement la fourniture d'une aide à une décision de maintenance, par le dispositif d'assistance de la Fig. 1, selon un mode de réalisation de l'invention ;
[Fig. 6] illustre schématiquement un algorithme d'aide à une décision de maintenance (utilisant le modèle précité), selon un mode de réalisation de l'invention ;
[Fig. 7] illustre schématiquement un exemple d'interface homme-machine implémentée par le dispositif de maintenance lors de l'exécution de l'algorithme d'aide à une décision de maintenance de la Fig. 6, dans un mode de réalisation de l'invention ;
[Fig. 8] illustre schématiquement un exemple d'architecture matérielle du dispositif d'assistance de la Fig. 1, selon un mode de réalisation de l'invention ; et
[Fig. 9] illustre schématiquement un exemple d'algorithme de maintenance d'un aéronef (utilisant l'algorithme d'aide précité).

### EXPOSE DETAILLE DE MODES DE REALISATION

La description détaillée ci-après s'attache à décrire la solution proposée dans le contexte de la maintenance des aéronefs. Comme déjà mentionné plus haut, la solution proposée n'est pas limitée à ce contexte particulier et s'applique également à la maintenance de nombreux autres appareils (véhicules, machines, dispositifs, équipements, etc.) pour lesquels il existe un journal de bord contenant des entrées (consignant les défaillances techniques détectées sur l'appareil) et des réponses correspondantes (consignant les procédures de maintenance ayant permis de répondre à ces défaillances).

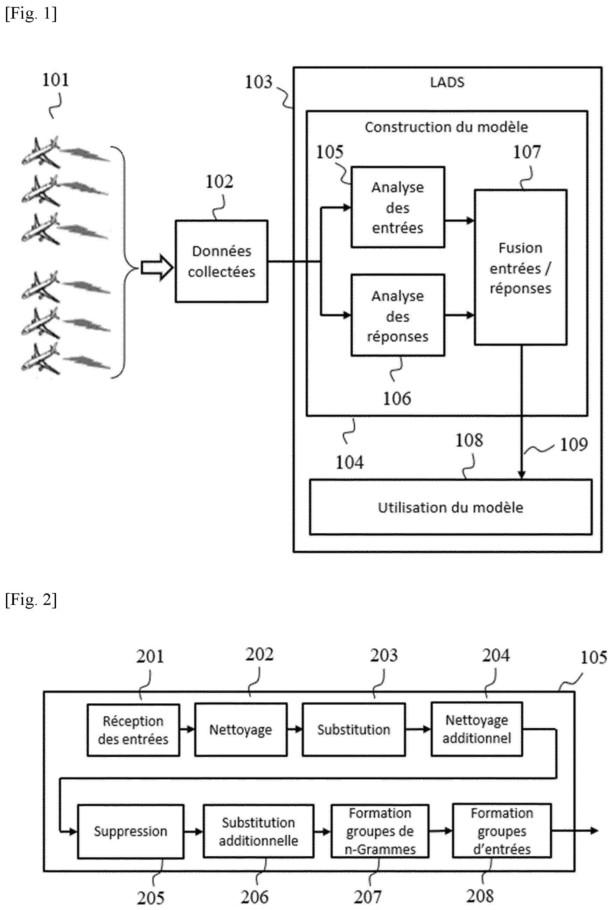

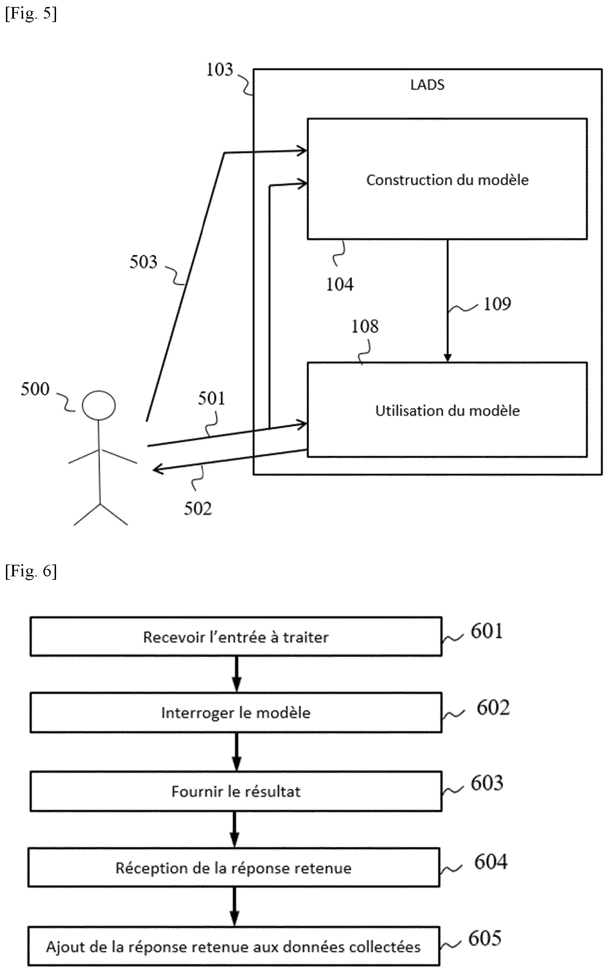

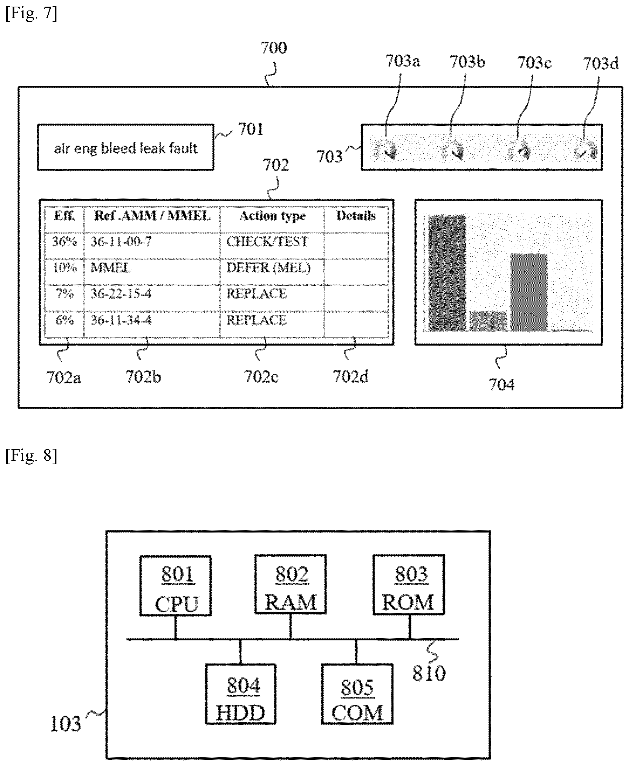

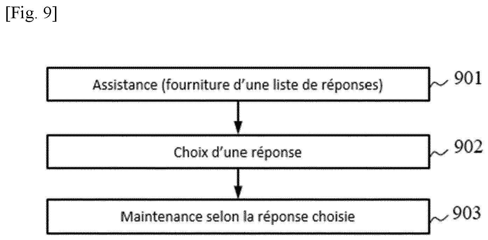

La présentation ci-dessous se décompose comme suit : la construction d'un modèle par un dispositif d'assistance est présentée en relation avec les Figs. 1 à 4 ; l'utilisation de ce modèle, dans un algorithme d'aide exécuté par un dispositif d'assistance, est présentée en relation avec les Figs. 5 à 7 ; l'architecture matérielle de ce dispositif d'assistance est présentée en relation avec la Fig. 8 ; et un algorithme de maintenance utilisant cet algorithme d'aide est présenté en relation avec la Fig. 9.

La **Fig. 1** illustre schématiquement la construction d'un modèle 109 par un dispositif d'assistance 103, selon un mode de réalisation de l'invention. Comme détaillé par la suite, ce modèle est configuré pour être utilisé dans un algorithme d'aide à une décision de maintenance relative à un aéronef sur lequel une défaillance technique est détectée et fait l'objet d'une entrée dans un journal de bord de l'aéronef.

Le dispositif d'assistance 103 (aussi appelé LADS, pour « Logbook Answer Decision Support » en anglais) reçoit des données 102 collectées dans des journaux de bord d'une flotte d'aéronefs 101. Les données collectées 102 comprennent des entrées et des réponses associées. Chaque entrée est relative à une défaillance technique donnée détectée sur un des aéronefs de la flotte d'aéronefs 101, et est associée à une réponse indiquant une procédure de maintenance ayant permis de répondre à la défaillance technique donnée.

Le dispositif d'assistance 103 comprend deux blocs fonctionnels principaux : un bloc 104 de construction du modèle (qui va maintenant être décrit plus en détail) et un bloc 108 d'utilisation du modèle (qui est décrit plus bas en relation avec les Figs. 5 à 7).

Le bloc 104 de construction du modèle comprend les sous-blocs fonctionnels suivants : un sous-bloc 105 d'analyse des entrées, un sous-bloc 106 d'analyse des réponses et un sous-bloc 107 de fusion des entrées et des réponses (après leur analyse par les sous-blocs 105 et 106 respectivement), fournissant le modèle 109 au bloc 108 d'utilisation du modèle.

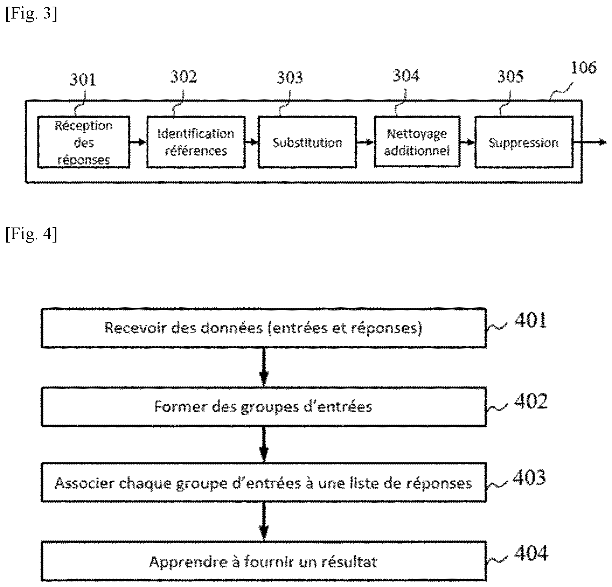

La **Fig. 4** illustre schématiquement un algorithme de construction du modèle, selon un mode de réalisation de l'invention. Cet algorithme est exécuté par le dispositif d'assistance 103 de la Fig. 1, et plus précisément par le bloc 104 de construction du modèle.

Dans une étape 401, le dispositif d'assistance reçoit les données collectées 102, comprenant des entrées et des réponses.

Dans une étape 402, le dispositif d'assistance forme des groupes d'entrées à partir des entrées comprises dans les données collectées. Le critère pour former les groupes d'entrées est que les entrées d'un même groupe ont une signification commune en matière de description de défaillance technique.

Dans une étape 403, le dispositif d'assistance associe à chaque groupe d'entrées une liste de réponses générée à partir des réponses associées aux entrées de ce groupe d'entrées.

Dans une étape 404, le dispositif d'assistance apprend à fournir un résultat quand le modèle est interrogé avec une entrée à traiter donnée. Ce résultat comprend une liste de réponses associée à un groupe d'entrées sélectionné parmi la pluralité de groupes d'entrées. Le groupe d'entrées sélectionné est celui comprenant des entrées ayant une signification identique ou proche, en matière de description de défaillance technique, de la signification de l'entrée à traiter donnée.

La **Fig. 2** illustre schématiquement le sous-bloc 105 d'analyse des entrées, compris dans le dispositif d'assistance 103 de la Fig. 1 (et plus précisément dans le bloc 104 de construction du modèle), dans un mode de réalisation de l'invention. Le sous-bloc 105 d'analyse des entrées comprend lui-même des sous-blocs fonctionnels référencés 201 à 208 et décrits ci-après.

Le sous-bloc 201 (aussi appelé « Réception des entrées ») reçoit les entrées (« logbook entries » en anglais) comprises dans les données collectées 102.

Le sous-bloc 202 (aussi appelé « Nettoyage ») effectue un nettoyage des entrées reçues. Ce nettoyage comprend une normalisation des entrées des journaux de bord des aéronefs de la flotte 101, par exemple en utilisant un processus standard de traitement du langage naturel (ou NLP pour « Natural Language Processing » en anglais) permettant notamment de corriger les erreurs de frappe, les acronymes et en ressortir un texte clair.

Le sous-bloc 203 (aussi appelé « Substitution ») effectue une homogénéisation du vocabulaire utilisé dans les entrées, suivant les spécificités d'un certain type d'aéronef (par exemple l'A350). Par exemple, si l'élément d'aéronef « spoiler » est désigné par différents termes dans les différentes entrées (par exemple « splr » et « splrs »), un seul terme est conservé. Par exemple si le terme « splr » est conservé, tous les termes « splrs » sont remplacés par « splr ».

Le sous-bloc 204 (aussi appelé « Nettoyage additionnel ») effectue un nettoyage supplémentaire des entrées, afin de supprimer (filtrer) les entrées dont les réponses associées sont considérées comme n'ayant finalement pas été concluantes. Dans un mode de réalisation, l'exécution du sous-bloc 204 utilise le jugement et/ou les connaissances du fabricant d'aéronefs (par exemple des membres du service d'ingénierie et/ou du service d'assistance client).

Le sous-bloc 205 (aussi appelé « Suppression ») effectue une suppression de données non pertinentes dans le libellé des entrées.

Le sous-bloc 206 (aussi appelé « Substitution additionnelle ») effectue une recherche de termes synonymes dans les entrées, pour ne conserver qu'un seul de ces termes synonymes dans les entrées concernées.

Le sous-bloc 207 (aussi appelé « Formation groupes de n-Grammes ») forme des groupes (clusters) de n-grammes (ensembles de mots successifs) contenus dans les entrées. Pour cela sont étudiés l'enchaînement des mots ainsi que les distances des mots les uns par rapport aux autres, et lorsque qu'est repérée une ressemblance dans un enchaînement et une fréquence de mots, un nouveau groupe de n-grammes est formé ou bien un n-gramme est ajouté à un groupe existant de n-grammes.

Le sous-bloc 208 (aussi appelé « Formation groupe d'entrées ») forme des groupes (clusters) d'entrées, en se basant sur les groupes (clusters) de n-grammes formés par le sous-bloc 207. Chaque groupe d'entrées contient des entrées ayant une signification commune, en matière de description de défaillance technique. Le sous-bloc 208 utilise par exemple une intelligence artificielle (ou AI pour « Artificial Intelligence » en anglais).

La **Fig. 3** illustre schématiquement le sous-bloc 106 d'analyse des réponses, compris dans le dispositif d'assistance 103 de la Fig. 1 (et plus précisément dans le bloc 104 de construction du modèle), dans un mode de réalisation de l'invention. Le sous-bloc 106 d'analyse des réponses comprend lui-même des sous-blocs fonctionnels référencés 301 à 305 et décrits ci-après.

Le sous-bloc 301 (aussi appelé « Réception des réponses ») reçoit les réponses (« logbook responses » en anglais) comprises dans les données collectées 102.

Le sous-bloc 302 (aussi appelé « Identification références ») identifie des références AMM et des références MMEL contenues dans les réponses reçues, et conserve uniquement les réponses contenant une référence AMM ou une référence MMEL. Les références AMM (pour « Aircraft Maintenance Manual » en anglais) sont des références mentionnées dans le manuel de maintenance des aéronefs. Les références MMEL (pour « Master Minimum Equipment List » en anglais) sont des références mentionnées dans une liste principale d'équipement minimal.

Le sous-bloc 303 (aussi appelé « Substitution ») effectue une homogénéisation du vocabulaire utilisé dans les réponses, suivant les spécificités d'un certain type d'aéronef (par exemple l'A350).

Le sous-bloc 304 (aussi appelé « Nettoyage additionnel ») effectue un nettoyage supplémentaire des réponses, afin de supprimer les réponses considérées comme n'ayant finalement pas été concluantes. Dans un mode de réalisation, l'exécution du sous-bloc 304 utilise (comme pour le sous-bloc 204) le jugement et/ou les connaissances du fabricant d'aéronefs (par exemple des membres du service d'ingénierie et/ou du service d'assistance client).

Le sous-bloc 305 (aussi appelé « Suppression ») effectue une suppression de données non pertinentes dans le libellé des réponses, afin de ne conserver que des libellés standardisés de références AMM (par exemple les six premiers digits) ou de références MMEL. Par exemple, un opérateur de maintenance, lorsqu'il informe sur sa procédure de réparation, peut insérer des informations qui n'apportent rien en termes de réparation proprement dite (par exemple, « j'ai mis des broches puis je les ai enlevées » : on sait pertinemment que l'opérateur va les enlever donc il n'est pas nécessaire de l'indiquer). Ces informations, qui ne sont pas liées à la réparation proprement dite, sont supprimées pour ne conserver que les informations relatives aux actions de maintenance essentielles.

Ainsi, en reprenant la description de la Fig. 1, le sous-bloc 107 (de fusion des entrées et des réponses) reçoit d'une part les groupes (clusters) d'entrées fournis par le sous-bloc 105 d'analyse des entrées et d'autre part les réponses traitées (comprenant uniquement des références AMM ou des références MMEL) fournies par le sous-bloc 106 d'analyse des réponses. A partir de tous ces éléments reçus, le sous-bloc 107 génère le modèle 109 et le fournit au bloc 108 d'utilisation du modèle. Dans le modèle, comme déjà mentionné plus haut, chaque groupe d'entrées est associé à une liste de réponses générée à partir des réponses associées aux entrées de ce groupe d'entrées. En outre, le modèle est configuré pour apprendre à fournir un résultat quand il est interrogé avec une entrée à traiter donnée. Ce résultat comprend une liste de réponses associée à un groupe d'entrées sélectionné parmi la pluralité de groupes d'entrées. Le groupe d'entrées sélectionné est celui comprenant des entrées ayant une signification identique ou proche, en matière de description de défaillance technique, de la signification de l'entrée à traiter donnée.

La **Fig. 5** illustre schématiquement la fourniture d'une aide à une décision de maintenance, par le dispositif d'assistance 103 de la Fig. 1, selon un mode de réalisation de l'invention utilisant le modèle précité 109. En résumé, un utilisateur 500 interroge le dispositif d'assistance 103 avec une entrée à traiter 501 et en retour, le dispositif d'assistance 103, et plus précisément le bloc 108, utilise le modèle 109 pour fournir un résultat 502 (liste de réponses associée à un groupe d'entrées sélectionné) à l'utilisateur. En outre, dans un mode de réalisation, la réponse 503 retenue par l'utilisateur est fournie, avec l'entrée à traiter 501, au bloc 104 de construction du modèle, afin d'enrichir le modèle.

De nombreux types d'utilisateur peuvent bénéficier de la solution proposée, notamment mais non exclusivement :
- un opérateur de maintenance ;
- un membre d'équipage de l'aéronef ;
- un membre d'un organisme de gestion du maintien de la navigabilité (ou CAMO pour « Continuing Airworthiness Management Organization » en anglais) ;
- un membre d'un organisme de maintenance agréé (ou AMO pour « Approved Maintenance Organization » en anglais) :
- un membre d'un service client d'un fabricant d'aéronefs ;
- un membre d'un service d'ingénierie d'un fabricant d'aéronefs ;
- un membre d'un service de contrôle et mise à jour d'un manuel de dépannage d'aéronefs (ou TSM pour « TroubleShooting Manual » en anglais) ;
- un membre d'un centre de contrôle de maintenance d'aéronefs (ou MCC pour « Maintenance Control Center » en anglais) ;
- un membre d'un fournisseur de journaux de bord électronique ;
- etc.

Plus précisément, la **Fig. 6** illustre schématiquement un algorithme d'aide à une décision de maintenance (utilisant le modèle précité), selon un mode de réalisation de l'invention. Cet algorithme est exécuté par le dispositif d'assistance 103 de la Fig. 1.

Dans une étape 601, le dispositif d'assistance reçoit l'entrée à traiter 501, via une interface homme-machine.

Dans une étape 602, le dispositif d'assistance interroge le modèle avec l'entrée à traiter, afin que le modèle sélectionne un groupe d'entrées (celui comprenant des entrées ayant une signification identique ou proche, en matière de description de défaillance technique, de la signification de l'entrée à traiter) et fournisse un résultat comprenant la liste de réponses associée à ce groupe d'entrées sélectionné.

Dans une étape 603, le dispositif d'assistance fournit le résultat à l'utilisateur, via l'interface homme-machine précitée.

Dans une étape 604, le dispositif d'assistance reçoit la réponse 503 retenue par l'utilisateur parmi la liste de réponses associée au groupe d'entrées sélectionné.

Dans une étape 605, le dispositif d'assistance ajoute la réponse retenue 503 aux données collectées et traitées par le modèle, en associant la réponse retenue 503 à l'entrée à traiter 501.

La **Fig. 7** illustre schématiquement un exemple d'interface homme-machine 700 implémentée par le dispositif de maintenance 103 lors de l'exécution de l'algorithme d'aide à une décision de maintenance de la Fig. 6, dans un mode de réalisation de l'invention.

L'interface homme-machine 700 est dans cet exemple une interface affichée sur un écran d'affichage et comprenant un champ de saisie 701 et trois champs de résultat 702, 703 et 704.

Le champ de saisie 701 permet à l'utilisateur 500 de saisir une entrée à traiter. Dans l'exemple illustré, l'entrée à traiter qui a été saisie est « air eng bleed leak fault », indiquant une fuite du système pneumatique du moteur de l'aéronef.

Le premier champ de résultat 702 permet d'afficher la liste de réponses associée au groupe d'entrées sélectionné par le modèle. Dans l'exemple illustré, la liste se présente sous la forme d'un tableau comprenant :
- une première colonne 702a intitulée « Eff. » et contenant une information d'efficacité exprimée en pourcentage ;
- une deuxième colonne 702b intitulée « Ref. AMM/MMEL » et contenant une réponse sous la forme d'une référence AMM ou une référence MMEL ;
- une troisième colonne 702c intitulée « Action type » et contenant un type de réponse ; et
- une quatrième colonne 702d intitulée « Details » et contenant des informations complémentaires relatives à la réponse concernée.

Chaque ligne de ce tableau détaille donc une réponse de la liste. Par exemple, la première réponse de la liste est la référence AMM « 36-11-00-7 », qui est associée à une information d'efficacité de 36% et un type d'action « Check/Test ».

Dans l'exemple illustré, correspondant à un mode de réalisation particulier, les réponses de la liste sont triées en fonction des informations d'efficacité 702a auxquelles ces réponses sont associées. Ainsi, les quatre réponses sont associées respectivement à des informations d'efficacité de 36%, 10%, 7% et 6%.

Dans un mode de réalisation, l'information d'efficacité 702a associée à une réponse donnée 702b est fonction d'au moins un des deux paramètres suivants : un nombre d'occurrence de la réponse donnée dans les données collectées par le modèle ; et une période de temps pendant laquelle aucune nouvelle occurrence de la réponse donnée n'apparaît dans les données collectées par le modèle.

Dans une variante (non illustrée), la liste de réponses associée au groupe d'entrées sélectionné comprend :
- une première sous-liste, dite de réparation, contenant des réponses ayant chacune permis d'éviter une nouvelle occurrence de l'entrée associée au moins pendant une durée de référence prédéterminée ; et
- une deuxième sous-liste, dite de libération, contenant des réponses n'ayant chacune permis d'éviter une nouvelle occurrence de l'entrée associée que pendant une durée inférieure à la durée de référence prédéterminée.

Le deuxième champ de résultat 703 permet d'afficher un ou plusieurs indicateurs d'impact opérationnel possibles. Dans l'exemple illustré, correspondant à un mode de réalisation particulier, les quatre indicateurs suivants sont affichés :
- un indicateur 703a (aussi nommé « Delay+15' ») de retard d'aéronef supérieur à un seuil prédéterminé (par exemple 15 mn) ;
- un indicateur 703b (aussi nommé « Cancel ») d'annulation de vol d'aéronef ;
- un indicateur 703c (aussi nommé « IFTB », pour « In-Flight Turn Back » en anglais) de retour d'aéronef au point de départ ; et
- un indicateur 703d (aussi nommé « Diversion ») de changement de destination d'aéronef.

Dans un mode de réalisation, chacun des indicateurs d'impact opérationnel (703a à 703d) possible possède une valeur fonction de valeurs d'impact opérationnel possible préalablement obtenues pour au moins certaines des réponses de la liste de réponses associée au groupe d'entrées sélectionné.

Ainsi, dans le cas où l'utilisateur est un opérateur de maintenance, l'interface homme-machine 700 lui propose une liste de réponses possibles (procédures de maintenance) au problème que définit l'entrée à traiter (logbook entry), avec pour chaque réponse possible son information d'efficacité (702a) et son impact opérationnel (703a à 703d). L'utilisateur dispose donc d'une aide (« support » en anglais) pour décider quelle réponse adopter. Une fois la réponse (procédure de maintenance) choisie et les actions de réparation réalisées, l'utilisateur peut les saisir dans le journal de bord de l'aéronef (logbook) qui est transmis au dispositif d'assistance 103 pour être pris en compte.

La **Fig. 8** illustre schématiquement un exemple d'architecture matérielle du dispositif d'assistance 103 de la Fig. 1, selon un mode de réalisation de l'invention. Le dispositif d'assistance 103 comprend, reliés par un bus de communication 810 : un processeur ou CPU (« Central Processing Unit » en anglais) 801 ; une mémoire vive RAM (« Random Access Memory » en anglais) 802 ; une mémoire morte ROM (« Read Only Memory » en anglais) 803, par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) 804 ; au moins une interface de communication 805 permettant au dispositif d'assistance 103 notamment de recevoir les données 102 collectées dans des journaux de bord de la flotte d'aéronefs 101 (voir Fig. 1) et d'interagir avec l'utilisateur 500 (voir Fig. 5).

Le processeur 801 est capable d'exécuter des instructions chargées dans la RAM 802 à partir de la ROM 803, d'une mémoire externe (non représentée), d'un support de stockage, tel qu'une carte SD, ou d'un réseau de communication (non représenté). Lorsque le dispositif d'assistance 103 est mis sous tension, le processeur 801 est capable de lire de la RAM 802 des instructions et de les exécuter. Ces instructions forment un programme d'ordinateur causant la mise en œuvre, par le processeur 801, des comportements, étapes et algorithme décrits ici (voir plus haut la description des Figs. 1 à 7), en particulier l'implémentation des deux blocs fonctionnels principaux 104 (bloc de construction du modèle) et 108 (bloc d'utilisation du modèle).

Tout ou partie des comportements, étapes et algorithme décrits ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, le dispositif d'assistance 103 comprend de la circuiterie électronique agencée et configurée pour implémenter les comportements, étapes et algorithmes décrits ici), en particulier l'implémentation des deux blocs fonctionnels principaux 104 et 108.

Dans une variante, le bloc 104 de construction du modèle et le bloc 108 d'utilisation du modèle sont compris dans deux dispositifs de calcul séparés (possédant chacun, dans un mode de réalisation, l'architecture matérielle détaillée sur la Fig. 8). Dans cette variante, le dispositif de calcul implémentant le bloc 108 d'utilisation du modèle peut disposer d'une puissance de calcul beaucoup plus faible que celle dont dispose le dispositif de calcul implémentant le bloc 104 de construction du modèle. En effet, la construction du modèle demande une beaucoup plus grande puissance de calcul que l'utilisation du modèle. Un autre avantage de cette variante est que le dispositif de calcul implémentant le bloc 104 de construction du modèle peut coopérer (c'est-à-dire fournir le modèle construit) à une pluralité de dispositifs de calcul implémentant chacun le bloc 108 d'utilisation du modèle.

La solution offre de nombreux avantages, tant pour les compagnies aériennes que pour les fabricants d'aéronefs.

Par exemple, pour les compagnies aériennes :
- la capacité de connaître directement, à partir de chaque entrée dans le journal de bord, les impacts opérationnels possibles ; et
- la capacité de connaître directement, à partir de chaque entrée dans le journal de route, la référence de la procédure de maintenance pour y répondre : procédure de réparation définie par une référence AMM (par exemple jusqu'à 6 chiffres) ou procédure MMEL pour répondre à l'entrée du journal de bord et ainsi libérer l'aéronef sans utiliser la liste longue et théoriquement construite des tâches TSM (ainsi, pendant le temps de rotation (TAT), tout membre d'un AMO ou CAMO, tout mécanicien ou tout membre d'un MCC, peut obtenir immédiatement une référence AMM ou MMEL pertinente à appliquer et ainsi gagner beaucoup de temps).

Par exemple, pour les fabricants d'aéronefs :
- la capacité de vérifier et d'améliorer le TSM en fonction des retours d'information en service et efficaces ;
- la capacité de proposer un service aux compagnies aériennes ; et
- la possibilité de proposer aux fournisseurs de journaux de bord électroniques (eLogbook) un moyen d'autoriser la saisie en langage naturel de l'entrée dans le journal de bord.

La **Fig. 9** illustre schématiquement un exemple d'algorithme de maintenance d'un aéronef (utilisant l'algorithme d'aide précité). On suppose qu'une défaillance technique a été détectée sur l'aéronef et fait l'objet d'une entrée dans le journal de bord de l'aéronef, dite entrée à traiter.

Dans une étape 901, le dispositif d'assistance 103 exécute l'algorithme d'aide à une décision de maintenance, dans un des modes de réalisation décrits plus haut (voir la description des Figs. 5 à 7). Pour mémoire, cet algorithme d'aide reçoit l'entrée à traiter et fournit à un utilisateur un résultat comprenant une liste de réponses associée à un groupe d'entrées sélectionné en fonction de l'entrée à traiter.

Dans une étape 902, l'utilisateur choisit une réponse dans la liste de réponses.

Dans une étape 903, la procédure de maintenance indiquée dans la réponse choisie est exécutée, par l'utilisateur ou bien de manière automatique ou semi-automatique.

## Revendications

1. Procédé, implémenté par un dispositif d'assistance (103) comprenant une circuiterie électronique, d'aide à une décision de maintenance relative à un appareil sur lequel une défaillance technique est détectée et fait l'objet d'une entrée dans un journal de bord de l'appareil, dite entrée à traiter (501), le procédé comprenant :
- recevoir (601) l'entrée à traiter ;
- interroger (602), avec l'entrée à traiter, un modèle configuré pour fournir, quand il est interrogé avec une entrée donnée, un résultat comprenant une liste de réponses associée à un groupe d'entrées sélectionné parmi une pluralité de groupes d'entrées, chaque groupe d'entrées étant formé à partir d'entrées comprises dans des données collectées et ayant une signification commune en matière de description de défaillance technique, chaque groupe d'entrées étant associé à une liste de réponses générée à partir des réponses associées aux entrées dudit groupe d'entrées, le groupe d'entrées sélectionné comprenant des entrées ayant une signification identique ou proche, en matière de description de défaillance technique, de la signification de l'entrée donnée, les données collectées provenant de journaux de bord d'une flotte d'appareils et comprenant des entrées, relatives à des défaillances techniques détectées sur les appareils de la flotte, et des réponses associées, indiquant les procédures de maintenance ayant permis de répondre auxdites défaillances techniques ; et
- fournir (603) à un utilisateur (500) le résultat (502) de l'interrogation du modèle avec l'entrée à traiter, le résultat comprenant la liste de réponses associée au groupe d'entrées sélectionné par le modèle en fonction de l'entrée à traiter.

2. Procédé selon la revendication 1, dans lequel l'appareil est un aéronef.

3. Procédé selon la revendication 2, dans lequel la liste de réponses associée au groupe d'entrées sélectionné comprend des références (702b) appartenant au groupe comprenant :
- des références d'un manuel de maintenance des aéronefs, dites références AMM, pour « Aircraft Maintenance Manual » en anglais ; et
- des références d'une liste principale d'équipement minimal, dites références MMEL, pour « Master Minimum Equipment List » en anglais.

4. Procédé selon l'une quelconque des revendications 1 à 3, dans lequel chacune des réponses, comprises dans la liste de réponses associée au groupe d'entrées sélectionné, est associée à une information d'efficacité (702a).

5. Procédé selon la revendication 4, dans lequel les réponses (702b), comprises dans la liste de réponses associée au groupe d'entrées sélectionné, sont triées en fonction des informations d'efficacité (702a) auxquelles lesdites réponses sont associées.

6. Procédé selon l'une quelconque des revendications 4 et 5, dans lequel l'information d'efficacité (702a) associée à une réponse donnée est fonction d'au moins un paramètre appartenant au groupe comprenant :
- un nombre d'occurrence de la réponse donnée dans les données collectées par le modèle ; et
- une période de temps pendant laquelle aucune nouvelle occurrence de la réponse donnée n'apparaît dans les données collectées par le modèle.

7. Procédé selon l'une quelconque des revendications 1 à 6, dans lequel la liste de réponses (702b) associée au groupe d'entrées sélectionné comprend :
- une première sous-liste, dite de réparation, contenant des réponses ayant chacune permis d'éviter une nouvelle occurrence de l'entrée associée au moins pendant une durée de référence prédéterminée ; et
- une deuxième sous-liste, dite de libération, contenant des réponses n'ayant chacune permis d'éviter une nouvelle occurrence de l'entrée associée que pendant une durée inférieure à la durée de référence prédéterminée.

8. Procédé selon l'une quelconque des revendications 1 à 7, dans lequel le résultat (502), de l'interrogation du modèle avec l'entrée à traiter (501), comprend en outre au moins un indicateur d'impact opérationnel possible (703).

9. Procédé selon les revendications 2 et 8, dans lequel ledit au moins un indicateur d'impact opérationnel possible appartient au groupe comprenant :
- un indicateur (703a) de retard d'aéronef supérieur à un seuil prédéterminé ;
- un indicateur (703b) d'annulation de vol d'aéronef ;
- un indicateur (703c) de retour d'aéronef au point de départ ; et
- un indicateur (703d) de changement de destination d'aéronef.

10. Procédé selon l'une quelconque des revendications 8 et 9, dans lequel ledit au moins un indicateur d'impact opérationnel (703) possible possède une valeur fonction de valeurs d'impact opérationnel possible préalablement obtenues pour au moins certaines des réponses (702b) de la liste de réponses associée au groupe d'entrées sélectionné.

11. Procédé selon l'une quelconque des revendications 1 à 10, comprenant en outre :
- réception (604) d'une réponse (503) retenue par l'utilisateur parmi la liste de réponses associée au groupe d'entrées sélectionné ; et
- ajouter (605) la réponse retenue (503) aux données collectées et traitées par le modèle, en associant la réponse retenue (503) à l'entrée à traiter (501).

12. Produit programme d'ordinateur, comportant des instructions entraînant l'exécution, par un processeur (801), du procédé selon l'une quelconque des revendications 1 à 11, lorsque lesdites instructions sont exécutées par le processeur.

13. Support de stockage (803), stockant un programme d'ordinateur comportant des instructions entraînant l'exécution, par un processeur (801), du procédé selon l'une quelconque des revendications 1 à 11, lorsque lesdites instructions sont lues et exécutées par le processeur.

14. Dispositif d'assistance (103), comprenant une circuiterie électronique configurée pour implémenter le procédé selon l'une quelconque des revendications 1 à 11.

15. Procédé, mis en œuvre par ordinateur (103), de construction d'un modèle configuré pour être utilisé dans un procédé, selon l'une quelconque des revendications 1 à 11, d'aide à une décision de maintenance relative à un appareil sur lequel une défaillance technique est détectée et fait l'objet d'une entrée dans un journal de bord de l'appareil, dite entrée à traiter (501), le procédé de construction du modèle comprenant:
- recevoir (401) des données (102) collectées dans des journaux de bord d'une flotte d'appareils (101) et comprenant des entrées et des réponses associées, chaque entrée étant relative à une défaillance technique donnée détectée sur un des appareils de la flotte d'appareils, et étant associée à une réponse indiquant une procédure de maintenance ayant permis de répondre à la défaillance technique donnée ;
- former (402) des groupes d'entrées à partir des entrées comprises dans les données collectées, les entrées d'un même groupe ayant une signification commune en matière de description de défaillance technique ;
- associer (403) à chaque groupe d'entrées une liste de réponses générée à partir des réponses associées aux entrées dudit groupe d'entrées ; et
- apprendre à fournir (404), quand le modèle est interrogé avec une entrée à traiter donnée (501), un résultat (502) comprenant une liste de réponses associée à un groupe d'entrées sélectionné parmi la pluralité de groupes d'entrées, le groupe d'entrées sélectionné comprenant des entrées ayant une signification identique ou proche, en matière de description de défaillance technique, de la signification de l'entrée à traiter donnée.

16. Procédé de maintenance d'un appareil sur lequel une défaillance technique est détectée et fait l'objet d'une entrée dans un journal de bord de l'appareil, dite entrée à traiter, le procédé de maintenance comprenant :
- exécuter (901) le procédé d'aide à une décision de maintenance selon l'une quelconque des revendications 1 à 11, le procédé d'aide recevant l'entrée à traiter et fournissant un résultat comprenant une liste de réponses associée à un groupe d'entrées sélectionné en fonction de l'entrée à traiter ;
- choisir (902) une réponse dans la liste de réponses ; et
- exécuter (903) une procédure de maintenance indiquée dans la réponse choisie.
